# EUROPEAN PATENT APPLICATION

(11) **EP 4 808 112 A1**
(43) Date of publication of application: **16.09.2026**
(21) Application number: 25163685.8
(22) Date of filing: 14.03.2025
(51) Int. Cl.: H04N 7/18

(54) **METHOD, COMPUTER RELATED STORAGE MEDIUM, AND DEVICE FOR ADAPTING A STREAM OF IMAGE FRAMES FOR DISPLAY**

(71) Applicant: Axis AB, 223 69 Lund (SE)
(72) Inventor: Hassbring, Ludvig, 223 69 LUND (SE); Yuan, Song, 223 69 LUND (SE)
(74) Representative: AWA Sweden AB

(57) **Abstract**

A method is disclosed for adapting a stream of image frames for display. A first stream of image frames acquired by a pan tilt zoom, PTZ, camera arranged to monitor a scene are obtained, a first criterion related to pan or tilt motion of the PTZ camera is evaluated, and a second stream of image frames generated based on a background model of the monitored scene is obtained. On condition that the first criterion is not met, image frames from the first stream of image frames are injected in the stream of image frames for display. On condition that the first criterion is met, image frames from the second stream of image frames are injected in the stream of image frames for display.

## Description

### Technical field

The present invention relates to the field of monitoring a scene using a camera and specifically to adapting a stream of image frames for display.

### Background

When monitoring a scene, a pan tilt zoom, PTZ, camera may be used able to change the field of view of the PTZ camera, e.g. to show more details of the monitored scene in a video stream from the PTZ camera. Changing of the field of view of the PTZ camera may be done automatically by the PTZ camera sweeping the complete scene over a period of time, or the PTZ camera being automatically controlled such that the video stream from the PTZ camera includes and follows one or more objects detected in the scene. The changing of the field of view may also be performed by control by an operator viewing a video stream from the PTZ camera. However, a pan or tilt motion above a certain speed will result in motion blur in the video frames from the PTZ camera. This may reduce the situational awareness of an operator and make it more difficult to control the PTZ camera to arrive at a desired pan and tilt position. It may also affect the possibility for real-time computer implemented analysis of the image frames of the video stream form the PTZ camera.

### Summary of the invention

It is an objective of the present invention to mitigate the above problems and provide new methods, a non-transitory computer readable memory, and a device for adapting a stream of image frames for display.

According to a first aspect, a method is provided for adapting a stream of image frames for display. A first stream of image frames acquired by a pan tilt zoom, PTZ, camera arranged to monitor a scene are obtained, a first criterion related to pan or tilt motion of the PTZ camera is evaluated, and a second stream of image frames generated based on a background model of the monitored scene is obtained. On condition that the first criterion is not met, image frames from the first stream of image frames are injected in the stream of image frames for display. On condition that the first criterion is met, image frames from the second stream of image frames are injected in the stream of image frames for display.

By obtaining the second stream of images based on the background model and injecting image frames from the second stream of images on condition that the first criterion is met, motion blur caused in the first stream of image frames from the PTZ camera can be avoided in the image frame for display.

According to a second aspect, a non-transitory computer-readable storage medium is provided having stored thereon instructions for implementing the method according to the method of the first aspect, when executed in a device having processing capabilities.

According to a third aspect, a device is provided for adapting a stream of image frames for display, the device comprising circuitry configured to execute functions for performing the method of the first aspect.

It is to be understood that this invention is not limited to the particular component parts of the device described or acts of the method described as such devices and methods may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Figure 1a is a flow chart of a method for adapting a stream of images for display.
Figure 1b is a flow chart of a subset of steps of a method for adapting a stream of images for display.
Figure 2 schematically illustrates a device for adapting a stream of images for display.

### Detailed description of embodiments

The present invention will now be described more fully hereinafter with reference to the accompanying drawings, in which embodiments of the invention are shown.

Embodiments of the present invention are applicable in scenarios where a pan or tilt motion of a pan tilt zoom, PTZ, camera may result in an undesired motion blur in a sequence of image frames captured by the PTZ camera. Embodiments of the present invention may be used together with methods for detecting objects in image frames from the PTZ camera and masking of all or a subset of the objects before displaying the image frames, e.g. for privacy reasons. Masking may for example include covering an object with a solid colour, blurring the object, pixelating the object, or making the object more or less transparent.

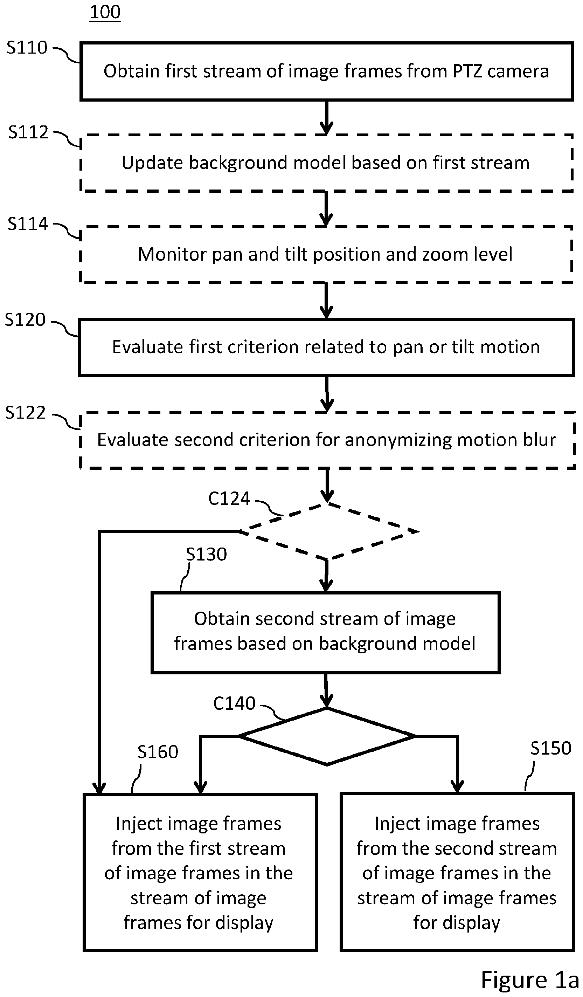

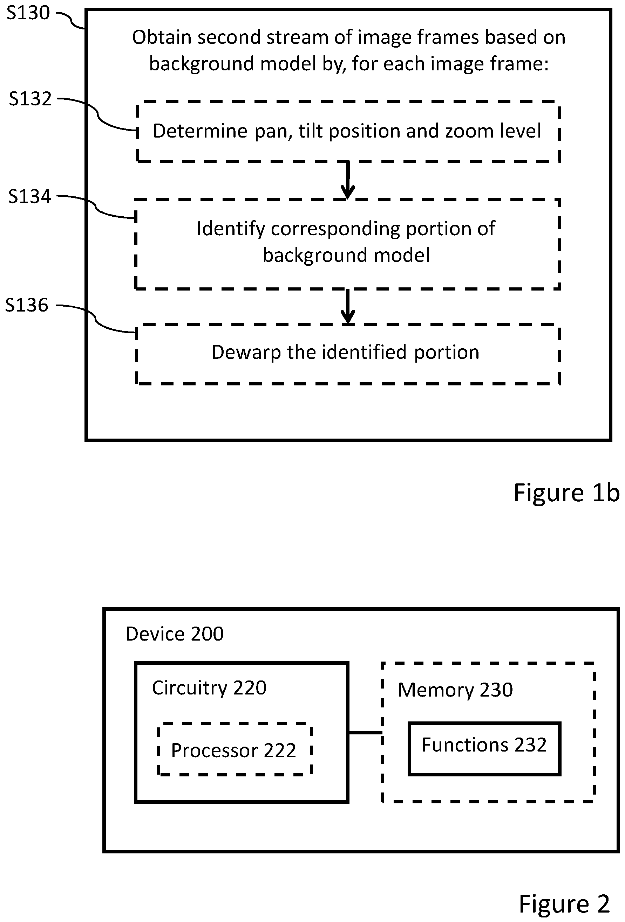

Embodiments of a method 100 for adapting a stream of image frames for display will now be described in relation to the flow chart in Figures 1a and 1b. The method 100 may for example be performed in a camera or it may be performed in a separate device connected to a camera.

Turning to Figure 1a, in the method 100, a first stream of image frames acquired by a pan tilt zoom, PTZ, camera arranged to monitor a scene is obtained S110. Furthermore, a first criterion related to pan or tilt motion of the PTZ camera is evaluated S120. The pan or tilt motion may include either of a pan or tilt motion or both of a pan and tilt motion. A second stream of image frames generated based on a background model of the monitored scene is also obtained S130. Then either image frames from the first stream of image frames or image frames from the second stream of image frames are injected in the stream of image frames for display. The image frames injected depends on whether the first criterion is met or not as evaluated S120. Specifically, image frames from the second stream of image frames are injected S150 in the stream of image frames for display on condition C140 that the first criterion is met and image frames from the first stream of image frames are injected S160 in the stream of image frames for display otherwise, i.e. on condition C140 that the criterion is not met.

Generally, the first criterion relating to a pan or tilt motion is set such that if the criterion is met, the pan or tilt motion is such that an operator is not able to successfully spatially control or follow the pan or tilt motion based on the image frames from the first stream of images. By successfully following the pan or tilt movement may be meant that an operator is able to understand from which portion to which portion of the scene the pan or tilt movement is. In some applications, this is affected by the angle speed of a pan or tilt movement. Hence, in embodiments a threshold may be set on the angle speed such that if the angle speed is over the threshold, the first criterion is met, and if the angle speed is equal to or below the threshold, the first criterion is not met.

In some embodiments, the first criterion may be set based on a change of a number of frames per second. For example, if an object detection algorithm is used, e.g. using a machine learning algorithm, that requires reduction of number of frames per second due to pan or tilt movement of the PTZ camera, such that the higher the angle speed of the pan or tilt movement of the PTZ camera, the lower the number of frames per second. Hence, the first criterion may be set such that if the first criterion is not met, the number of frames per second is sufficient for an operator to successfully control or follow the pan or tilt motion based on the image frames from the first stream of images and if the first criterion is met, the number of frames per second is not sufficient for an operator to successfully spatially control or follow the pan or tilt motion based on the image frames from the first stream of images. By successfully following the pan or tilt movement may be meant that an operator is able to understand from which portion to which portion of the scene the pan or tilt movement is. Given the relationship between frames per second and the angle speed of a pan or tilt movement, a threshold may be set on the angle speed such that if the angle speed is over the threshold, the first criterion is met, and if the angle speed is equal to or below the threshold, the first criterion is not met. In embodiments, the threshold on the angle speed may for example be 30° per second.

By injecting image frames from the second stream of image frames when the first criterion is met, a reduced number of frames per second in the first stream of image frames from the PTZ camera, e.g. due to adaptation to an objection detection algorithm, can be avoided in the image frame for display. Hence, the situational awareness of an operator may increase which could make it easier to control the PTZ camera to arrive at a desired pan and tilt position.

In some embodiments the first criterion related to pan or tilt motion of the PTZ camera may be set based on occurrence of motion blur. Specifically, the first criterion may be set such that if the first criterion is not met, motion blur does not occur or such that the caused motion blur is acceptable in the relevant application and vice versa, i.e. if the first criterion is met, motion blur does occur or such that the caused motion blur is not acceptable in the relevant application. For example, in an application where the method is used in relation to a risk of failing to mask object that should be masked, e.g. all objects or objects of particular classes, the first criterion may be set such that when the criterion is not met, any caused motion blur does not cause failure to mask objects and when the criterion is met, caused motion blur causes failure to mask objects. Such failure may for example be due to an object detector failing to detect objects or failing to correctly classifying objects due to the motion blur. This is for example relevant when the caused motion blur causes failure to mask objects whilst at the same time, an operator may still identify sufficient amount of details in the image frames for privacy not to be preserved, e.g. by the operator recognizing the identify of a person or being able to distinguish a registration plate etc.

Motion blur due to pan or tilt motion depends on a number of parameters, including angular speed of the PTZ camera during the pan or tilt motion, horizontal resolution of the sensor of the PTZ camera, horizontal field of view of the PTZ camera during the pan or tilt motion, and exposure time of the PTZ camera during the pan or tilt motion. The angular speed may for example be measured in the number of degrees the camera moves between capturing of two image frames. This may for example be monitored by monitoring a motor of the PTZ camera to determine movement or by monitoring other means for panning or tilting the PTZ camera. With the other parameters constant, the higher the angular speed, the larger the effects of motion blur (the more sever motion blur is caused). The resolution of the sensor affects motion blur in that, for a sensor with higher resolution there is more movement per pixel during a pan or tilt motion. Hence, with the other parameters constant, the higher the resolution of the sensor, the more severe motion blur is caused. Exposure time is the time that the sensor uses to detect an image frame. This may either be made electronically by setting a time window (exposure time) between which data from the sensor is gathered for an image frame or mechanically by having a physical shutter that is open and lets in light to the sensor during the exposure time. With the other parameters constant, the longer the exposure time, the more severe motion blur is caused.

Evaluating the first criterion may be performed by determining the angular speed, horizontal field of view and exposure time and based further on the horizontal resolution of the sensor determining if the values of these is expected to cause motion blur and/or if the effects of the motion blur caused are or are not acceptable in the relevant application.

For a scenario where the exposure time and horizontal field of view are constant, given the horizontal resolution of the sensor of the PTZ camera, a first threshold may be set on the angular speed during pan or tilt motion as the first criterion. If the angular speed is over the first threshold, the first criterion is met and if it is below or equal to the first threshold the first criterion is not met.

For a more general scenario a first threshold may be set based on: $Movement in Frame = \frac{Horizontal Resolution}{Horizontal Field of View} ⋅ ω ⋅ Exposure$
Where *'Movement in Frame'* is the movement in a frame during exposure measured in number of pixels, *'Horizontal resolution'* is the horizontal resolution of the sensor in the PTZ camera measured in number of pixels,
*'Horizontal Field of View'* is the field of view of the PTZ camera when capturing the image frames measured in degrees, *'ω'* is the angular speed measured in degrees per second, and *'Exposure'* is the exposure time of the captured image frames of the PTZ camera the in seconds. The first threshold is set such that for values of *Movement in Frame* above the first threshold motion blur is caused and/or the effects of motion blur caused are not acceptable in the relevant application and for values of *Movement in Frame* equal to or below the first threshold motion blur is not caused and/or the effects of motion blur caused are acceptable in the relevant application for values. If the value of
*Movement in Frame* is over the first threshold, the first criterion is met and if it is below or equal to the first threshold the first criterion is not met.

By injecting image frames from the second stream of image frames when the first criterion is met, motion blur caused in the first stream of image frames from the PTZ camera can be avoided in the image frame for display. Hence, the situational awareness of an operator may increase which could make it easier to control the PTZ camera to arrive at a desired pan and tilt position.

Additionally, in scenarios where masking of one or more objects should be performed in the image frames of the stream of image frames for display, injecting image frames from the second stream of images when the first criterion is met is further advantageous for avoiding displaying objects that should have been masked. Specifically, the first criterion is met, object detection in the first stream of image frames may fail due to motion blur and hence also masking of objects may fail. By injecting image frames from the second stream of images when the first criterion is met, which image frames are based on the background model and hence do not include the objects that should be masked. Hence, the risk of including unmasked versions of object that should have been masked is reduced or removed. Furthermore, as no masking is required in the image frames from the second stream of image frames injected in the stream of image frames for display, less processing resources are required in relation to corresponding image frames from the first stream of image frames when masking is required.

The stream of image frames for display may be provided to a display for displaying to an operator in real-time. In alternative or in addition, it may be provided for intermediate storage for later provision to a display for displaying to an operator.

Injecting image frames in the stream of image frames for display relates to which image frames are used for generating a stream of image frames for display. Injecting is typically done before encoding such that the image frames for display after injecting are encoded and then provided to a decoder for decoding before displaying on a display.

The method 100 may further comprise detecting a pan or tilt motion. Monitoring S120 the speed of pan or tilt motion may then be performed only on condition that a pan or tilt motion has been detected. If no pan or tilt motion is detected, the first criterion may be determined implicitly not to be met. In such a case, image frames from the first stream will be injected into the stream of image frames for display. Hence, such injection would be default unless a pan or tilt motion is detected.

The background model may be any model from which images may be obtained for the second stream of image frames to emulate a pan or tilt motion of the PTZ camera. The image frames of the second image frame should typically include only a background of the scene monitored by the PTZ camera, i.e. should only include features that are static in the scene over time and not objects moving into and out of the scene.

The background model may for example be based on image frames captured by the PTZ camera and stitched together, a 3D model of the scene from which 2D image frames can be derived. The background model is typically generated in advance. Furthermore, the background model is generated such that image frames may be obtained based on the background model that do not suffer from motion blur. As the image frames from the second stream of images are based on the background model which does not include any moving objects, these image frames will after encoding typically smaller in number of bits than corresponding image frames from the first stream of image frames after encoding. Additionally, these image frames may have a reduced resolution and/or reduced colour space, such as black and white or monochrome, which would further reduce the number of bits required for each image frame.

For the case when the background model is based on images captured by the PTZ camera and stitched together, the background model may be an image which covers the entire monitored scene. The background model may then be updated regularly to correspond to current conditions in the scene, such as the current season or other things affecting the visual appearance of the background of the monitored scene. There may also be a number of alternative background models which can be applied depending on and correspond to time of day, current whether conditions or other that also affect the visual appearance of the background of the monitored scene.

The background model of the monitored scene may be updated regularly based on image frames from the first stream of image frames. In addition, or alternatively, the background model of the monitored scene may be updated regularly based on image frames acquired by the PTZ camera when caused to sweep over the entire monitored scene.

Specifically, the background model may be a projection on a spherical surface of images from the PTZ camera which together cover the entire monitored scene. In such a case the method 100 may further comprise identifying an image frame from the PTZ camera depicting only background of the monitored scene, determining a pan and tilt position and a zoom level at capturing the identified image frame, and updating the background model of the monitored scene by projecting the identified image frame on the spherical surface at a location based on the determined pan and tilt position and having a size based on the determined zoom level. Identifying an image depicting only background may be achieved by identifying that the foreground of a sequence of images before the image has not changed, wherein the foreground is identified based on motion detection or object detection or both.

Generally, the image frames from the second stream of image frames injected into the stream of image frames to be displayed during the pan or tilt motion for which the first criterion is met should emulate image frames of the monitored scene during the pan or tilt motion of the PTZ camera.

The method 100 may thus further comprise monitoring S114 a pan and tilt position and a zoom level of the PTZ camera. The injected image frames of the second stream of image frames during a pan for which the first criterion is met may then emulate image frames of the monitored scene and be based on the background model of the monitored scene and on the monitored pan and tilt position and zoom level of the PTZ camera during the pan or tilt motion for which the first criterion is met. For example, during a pan or tilt motion for which the first criterion is met, each image frame of the image frames of the second stream to be injected may be obtained by generating the image frames from the background model of the monitored scene by using the pan and tilt position and zoom level of the PTZ camera corresponding to the timing of the respective image frame.

In alternative, the injected image frames of the second stream of image frames during a pan or tilt motion for which the first criterion is met emulate image frames of the monitored scene, and are based on the background model of the monitored scene, on a predetermined pan and tilt position and a predetermined zoom level of the PTZ camera at a start of the pan or tilt motion for which the first criterion is met, and on a predetermined pan and tilt position and predetermined zoom level of the PTZ camera at an end of the pan or tilt motion for which the first criterion is met. This alternative may for example be used in a scenario when the pan or tilt motion is determined in advance by an operator control command or an automatic control command in which the respective pan and tilt position and zoom level at the start and end of the pan or tilt motion are provided in advance of the pan or tilt motion together with a time the pan or tilt motion should take. Based on the values provided in the control command, it can be determined if the first criterion will be met. For example, during a pan or tilt motion for which the first criterion is met, each image frame of the image frames of the second stream to be injected may be obtained by generating the image frames from the background model of the monitored scene by using a virtual pan or tilt motion from the respective pan and tilt position and zoom level at the start and end of the pan or tilt motion. By this, no monitoring S114 of a pan and tilt position and a zoom level of the PTZ camera is required to emulate the images of the second image stream to be injected into the stream of image frames for display. It should however be noted that the alternative where the images of the second image stream to be injected into the stream of image frames for display are based on the pan and tilt position and zoom level of the PTZ camera corresponding to the timing of the respective image frame is also applicable in this scenario if the pan and tilt position and the zoom level of the PTZ camera are monitored.

Turning to Figure 1b, in embodiments where the background model is a projection on a spherical surface of images from the PTZ camera which together cover the entire monitored scene, obtaining S130 the second stream of image frames may comprise the following further acts for each image frame. First, a pan and tilt position and a zoom level are determined S132. Then the image frame is obtained by identifying S134 a portion on the spherical surface of the background model that corresponds to the determined pan and tilt position and zoom level, and dewarping S136 the identified portion to a rectangular image. This is based on the second stream of image frames being generated and obtained at the time of the pan and tilt motion such that the determined pan and tilt positions and a zoom levels correspond to the pan and tilt positions and a zoom levels during the pan and tilt motion thus resulting in obtained images that emulate images of the background of the scene from the PTZ during the pan and tilt motion.

Turning back to Figure 1a, the second stream of image frames generated based on a background model of the monitored scene may be obtained S130 continuously. This is advantageous in scenarios when there would be a substantial delay from a time when obtaining the second stream is initiated until image frames of the second stream are actually obtained. Continuously obtaining the second stream would then ensures that image frames of the second stream are available when a pan or tilt motion for which the first criterion is met is detected such that the image frames from the second stream should be injected into the stream of image frames for display.

In alternative, the second stream of image frames generated based on a background model of the monitored scene may be obtained S130 only on condition C124 that an initiation of pan or tilt motion is detected. Such an initiation may for example be detected by detection of the start of a pan and tilt motor in the PTZ camera, or by detection of a control from an operator of a pan or tilt motion of the PTZ camera, such as for example by written control commands or by means of a physical control means. Hence, the second stream is obtained as soon as a pan or tilt motion is initiated which increases the likelihood that it is obtained if a pan or tilt motion for which the first criterion is met is detected. This is advantageous in scenarios when a delay from a time of initiating obtaining the second stream until image frames of the second stream are actually obtained is equal to or shorter than the time from an initiation of pan or tilt motion is detected until a time when a pan or tilt motion for which the first criterion is met can be detected.

In a further alternative, the second stream of image frames generated based on a background model of the monitored scene may be obtained S130 only on condition C124 that that the first criterion is met. Hence, the second stream is obtained when a pan or tilt motion for which the first criterion is met is detected. This may be used in scenarios when a delay from a time of initiating obtaining of the second stream until image frames of the second stream are actually obtained is equal to or shorter than the time from detecting a pan or tilt motion for which the first criterion is met until a time when images captured at the time when the pan or tilt motion was first such that the first criterion was met are to be injected into the image frame for display. This may also be used in scenarios when injecting image frames from the first stream into the stream of image frames for display is acceptable during any time the delay from a time of initiating obtaining of the second stream until image frames of the second stream are actually obtained is exceeds the time from detecting a pan or tilt motion for which the first criterion is met until a time when images captured at the time when the pan or tilt motion was such that the first criterion was met are to be injected into the image frame for display.

In embodiments, a further step of evaluating S122 a second criterion for occurrence of motion blur causing objects to become anonymized due to pan or tilt motion of the PTZ camera is performed. The act of injecting S150 image frames from the second stream image frames in the stream of image frames for display is performed on the further condition that the second criterion is not met, wherein the second criterion just being met causes more severe motion blur than the first criterion just being met. The act of injecting S160 image frames from the first stream image frames in the stream of image frames for display is then performed on the further condition that the second criterion being met. Such embodiments are relevant in scenarios where masking of one or more objects should be performed in the image frames of the stream of image frames for display. Specifically, the second criterion may be set such that when pan or tilt motion is such that the second criterion is met, the motion blur becomes so severe that it will be impossible to recognize objects in the images in the first stream of image frames, i.e. the objects become anonymized. Hence, even if object detection fails due to motion blur and hence also masking of object for which privacy should be preserved fails, this will not affect privacy. Hence, when the second criterion is met, image frames from the first stream of images can be injected from a privacy point of view. The second criterion is typically only fulfilled if the first criterion is fulfilled. Hence, in some embodiments the second criterion is only evaluated if the first criterion is met. In such embodiments image frames there are three outcomes: 1) if the first criterion is not met, image frames from the first stream of image frames are injected in the stream of image frames for display, 2) if the first criterion is met and the second criterion is not met, image frames from the second stream of image frames are injected in the stream of image frames for display, and 3) if the first criterion is met and the second criterion is met, image frames from the first stream of image frames are injected in the stream of image frames for display.

Evaluating the second criterion for motion blur causing objects to become anonymized due to pan or tilt motion of the PTZ camera may be performed by determining the horizontal field of view, angular speed, and exposure time and based further on the horizontal resolution of the sensor and determining if the values of these are expected to cause motion blur so severe that even if object detection fails due to motion blur and hence also masking of object for which privacy should be preserved fails, this will not affect privacy .

For a scenario where the exposure time and horizontal field of view are constant, given the horizontal resolution of sensor of the PTZ camera, a second threshold may be set on the angular speed during pan or tilt motion as the second criterion. If the angular speed is over the second threshold, the second criterion is met and if it is below or equal to the second threshold the second criterion is not met.

For a more general scenario a second threshold may be set based on: $Movement in Frame = \frac{Horizontal Resolution}{Horizontal Field of View} ⋅ ω ⋅ Exposure$

Where *'Movement in Frame'* is the movement in a frame during exposure measured in number of pixels, *'Horizontal resolution'* is the horizontal resolution of the sensor in the PTZ camera measured in number of pixels,
*'Horizontal Field of View'* is the field of view of the PTZ camera when capturing the image frames measured in degrees, *'ω'* is the angular speed measured in degrees per second, and *'Exposure'* is the exposure time of the captured image frames of the PTZ camera the in seconds. The second threshold is set such that values of *'Movement in Frame'* over the second threshold cause motion blur that causes objects to become anonymized, and values of *'Movement in Frame'* equal to or below the second threshold do not cause motion blur that causes objects to become anonymized. If the value of *Movement in Frame* is over the second threshold, the second criterion is met and if it is below or equal to the second threshold the second criterion is not met. For example, it may be possible to recognize the identity of the person in an image where the face of the person is as little as 20 pixels wide. Based on this, a second threshold on *Movement in Frame* may be set at 200 pixels. If the horizontal resolution is 3840 pixels, the horizontal field of view is 90°, and the exposure time is 10 ms. This would correspond to a threshold for the angular speed of approximately 470°.

As motion blur becomes even more severe when the second criterion is met, the situational awareness of an operator may be reduced further which could make it even more difficult to control the PTZ camera to arrive at a desired pan and tilt position. Hence, from this point of view, embodiments where the image frames from the second stream of image frames are injected also when the second criterion is met, may be preferred, especially in scenarios when masking is not necessary.

The injected image frames from the second stream of image frames may include a visual indication that indicates to a viewer that it is not captured by the PTZ camera. For example, the injected image frames from the second stream of image frames may be black and white, may include a text, or may include a symbol or other. Such inclusion may be provided to indicate to an operator that the injected image frames from the second stream of image frames are replacement image frames for live view image frames during the pan or tilt motion. The injected image frames from the second stream of image frames may further be of lower resolution than image frames of the first stream of image frames.

Figure 2 shows a block diagram in relation to embodiments of a device 200 for adapting a stream of image frames for display. The device 200 may for example be a camera or may be a separate device connected to a camera.

The device 200 comprises a circuitry 220. The circuitry 220 is configured to carry out functions 232 of the device 200. The circuitry 220 may include a processor 222, such as for example a central processing unit (CPU), graphical processing unit (GPU), tensor processing unit (TPU), microcontroller, or microprocessor. The processor 222 is configured to execute program code. The program code may for example be configured to carry out the functions of the device 200.

The device 200 may further comprise a memory 230. The memory 230 may be one or more of a buffer, a flash memory, a hard drive, a removable media, a volatile memory, a non-volatile memory, a random access memory (RAM), or another suitable device. In a typical arrangement, the memory 230 may include a non-volatile memory for long term data storage and a volatile memory that functions as device memory for the circuitry 220. The memory 230 may exchange data with the circuitry 220 over a data bus. Accompanying control lines and an address bus between the memory 230 and the circuitry 220 also may be present.

Functions of the device 200 may be embodied in the form of executable logic routines (e.g., lines of code, software programs, etc.) that are stored on a non-transitory computer readable medium (e.g., the memory 230) of the device 200 and are executed by the circuitry 220 (e.g., using the processor 222). Furthermore, the functions of the device 200 may be a stand-alone software application or form a part of a software application that carries out additional tasks related to the device 500. The described functions may be considered a method that a processing unit, e.g., the processor 222 of the circuitry 220 is configured to carry out. Also, while the described functions may be implemented in software, such functionality may as well be carried out via dedicated hardware or firmware, or some combination of hardware, firmware and/or software.

The circuitry 220 is configured to execute the functions 232 for performing the method 100 as described in relation to Figures 1a and 1b. The detailed description of the acts of the method 100 described in relation to Figures 1a and 1b hereinabove apply also for the functions 232 of the device 200. Furthermore, the optional additional features of the method 100 described in relation to Figures 1a and 1b hereinabove, when applicable, apply also to the device 200.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method (100) for adapting a stream of image frames for display, the method comprising:
obtaining (S110) a first stream of image frames acquired by a pan tilt zoom, PTZ, camera arranged to monitor a scene;
evaluating (S120) a first criterion related to pan or tilt motion of the PTZ camera;
obtaining (S130) a second stream of image frames generated based on a background model of the monitored scene;
on condition (C140) that the first criterion is not met, injecting (S160) image frames from the first stream of image frames in the stream of image frames for display; and
on condition (C140) that the first criterion is met, injecting (S150) image frames from the second stream of image frames in the stream of image frames for display.

2. The method (100) of claim 1, wherein the act of obtaining (S130) a second stream of image frames generated based on a background model of the monitored scene is performed on condition (C124) that the first criterion is met.

3. The method of claim 1, wherein the step of obtaining (S130) a second stream of image frames generated based on a background model of the monitored scene is performed on condition (C124) that an initiation of pan or tilt motion is detected.

4. The method (100) of any one of the preceding claims, further comprising:
monitoring (S114) a pan and tilt position and a zoom level of the PTZ camera,
wherein the injected (5150) image frames of the second stream of image frames during a pan or tilt motion for which the first criterion is met emulate image frames of the monitored scene, and are based on the background model of the monitored scene and on the monitored pan and tilt position and zoom level of the PTZ camera during the pan or tilt motion for which the first criterion is met.

5. The method (100) of any one of claims 1 to 3, wherein the injected (S150) image frames of the second stream of image frames during a pan or tilt motion for which the first criterion is met emulate corresponding image frames of the monitored scene, and are based on the background model of the monitored scene, on a predetermined pan and tilt position and a predetermined zoom level of the PTZ camera at a start of the pan or tilt motion for which the first criterion is met, and on a predetermined pan and tilt position and predetermined zoom level of the PTZ camera at an end of the pan or tilt motion for which the first criterion is met.

6. The method of any one of the preceding claims, further comprising:
evaluating (S122) a second criterion for occurrence of motion blur causing objects to become anonymized due to pan or tilt motion of the PTZ camera;
wherein the act of injecting (S150) image frames from the second stream image frames in the stream of image frames for display is performed on the further condition that the second criterion is not met, and wherein the act of injecting (S160) image frames from the first stream image frames in the stream of image frames for display is performed on the further condition that the second criterion is met.

7. The method (100) of any one of the preceding claims, wherein injected (S150) images from the second stream of image frames include a visual indication that indicates to a viewer that it is not captured by the PTZ camera.

8. The method (100) of any one of the preceding claims, further comprising:
updating (S112) the background model of the monitored scene based on image frames from the first stream of image frames.

9. The method (100) of any one of the preceding claims, further comprising:
updating (S112) the background model of the monitored scene regularly based on image frames acquired by the PTZ camera when caused to sweep over the entire monitored scene.

10. The method (100) of any one of the preceding claims, wherein the background model is a projection on a spherical surface of images from the PTZ camera which together cover the monitored scene, the method further comprising:
identifying an image frame from the PTZ camera depicting only background of the monitored scene;
determining a pan and tilt position and a zoom level at capturing the identified image frame; and
updating the background model of the monitored scene by projecting the identified image frame on the spherical surface at a location based on the determined pan and tilt position and having a size based on the determined zoom level.

11. The method of claim 10, wherein the act of obtaining a second stream of image frames comprises, for each image frame:
determine (S132) a pan and tilt position and a zoom level; and
obtaining the image frame by:
identifying (S134) a portion on the spherical surface of the background model corresponding to the determined pan and tilt position and zoom level, and
dewarping (S136) the identified portion to a rectangular image.

12. A non-transitory computer readable storage medium having stored thereon instructions for implementing the method (100) according to any one of claims 1 to 11, when executed in a device having processing capabilities.

13. A device (200) for adapting a stream of image frames for display, the device comprising circuitry (220) configured to execute functions (232) for performing the method (100) according to any one of claims 1 to 11.

## Amended claims

### Amended claims in accordance with Rule 137(2) EPC.

1. A method (100) for adapting a stream of image frames for display, the method comprising:
obtaining (S110) a first stream of image frames acquired by a pan tilt zoom, PTZ, camera arranged to monitor a scene;
monitoring (S114) a pan and tilt position and a zoom level of the PTZ camera during a pan or tilt motion of the PTZ camera,
evaluating (S120) a first criterion based on occurrence of motion blur due to the pan or tilt motion of the PTZ camera;
obtaining (S130) a second stream of image frames generated based on a background model of the monitored scene, wherein the background model is a model from which image frames may be generated to emulate a pan or tilt motion of the PTZ camera;
on condition (C140) that the first criterion is not met, injecting (S160) image frames from the first stream of image frames in the stream of image frames for display; and
on condition (C140) that the first criterion is met, injecting (S150) image frames from the second stream of image frames in the stream of image frames for display, wherein image frames of the second stream of image frames during the pan or tilt motion of the PTZ camera are generated from the background model to emulate monitored pan and tilt positions and zoom levels of the PTZ camera during the pan or tilt motion of the PTZ camera.

2. A method (100) for adapting a stream of image frames for display, the method comprising:
obtaining (S110) a first stream of image frames acquired by a pan tilt zoom, PTZ, camera arranged to monitor a scene;
obtaining a respective pan and tilt position and zoom level of the PTZ camera at a start and end of a pan or tilt motion of the PTZ camera,
evaluating (S120) a first criterion based on occurrence of motion blur due to the pan or tilt motion of the PTZ camera;
obtaining (S130) a second stream of image frames generated based on a background model of the monitored scene, wherein the background model is a model from which image frame may be generated to emulate a pan or tilt motion of the PTZ camera;
on condition (C140) that the first criterion is not met, injecting (S160) image frames from the first stream of image frames in the stream of image frames for display; and
on condition (C140) that the first criterion is met, injecting (S150) image frames from the second stream of image frames in the stream of image frames for display, wherein image frames of the second stream of image frames during the pan or tilt motion of the PTZ camera are generated from the background model to emulate pan and tilt positions and zoom levels of a virtual pan or tilt motion of the PTZ camera from the respective pan and tilt position and zoom level of the PTZ camera at a start and end of the pan or tilt motion.

3. The method (100) of claim 1 or 2, wherein the act of obtaining (S130) a second stream of image frames generated based on a background model of the monitored scene is performed on condition (C124) that the first criterion is met.

4. The method of claim 1 or 2, wherein the step of obtaining (S130) a second stream of image frames generated based on a background model of the monitored scene is performed on condition (C124) that an initiation of pan or tilt motion is detected.

5. The method of any one of the preceding claims, further comprising:
evaluating (S122) a second criterion for occurrence of motion blur causing objects to become anonymized due to the pan or tilt motion of the PTZ camera, wherein the second criterion is met when the pan or tilt motion causes motion blur that causes objects in images of the first stream of image frames during the pan or tilt motion to become anonymized;
wherein the act of injecting (S150) image frames from the second stream image frames in the stream of image frames for display is performed on the further condition that the second criterion is not met, and wherein the act of injecting (S160) image frames from the first stream image frames in the stream of image frames for display is performed on the further condition that the second criterion is met.

6. The method (100) of any one of the preceding claims, wherein injected (S150) images from the second stream of image frames include a visual indication that indicates to a viewer that it is not captured by the PTZ camera.

7. The method (100) of any one of the preceding claims, further comprising:
updating (S112) the background model of the monitored scene based on image frames from the first stream of image frames.

8. The method (100) of any one of the preceding claims, further comprising:
updating (S112) the background model of the monitored scene regularly based on image frames acquired by the PTZ camera when caused to sweep over the entire monitored scene.

9. The method (100) of any one of the preceding claims, wherein the background model is a projection on a spherical surface of images from the PTZ camera which together cover the monitored scene, the method further comprising:
identifying an image frame from the PTZ camera depicting only background of the monitored scene;
determining a pan and tilt position and a zoom level at capturing the identified image frame; and
updating the background model of the monitored scene by projecting the identified image frame on the spherical surface at a location based on the determined pan and tilt position and having a size based on the determined zoom level.

10. The method of claim 9, wherein the act of obtaining a second stream of image frames comprises, for each image frame:
determine (S132) a pan and tilt position and a zoom level; and
obtaining the image frame by:
identifying (S134) a portion on the spherical surface of the background model corresponding to the determined pan and tilt position and zoom level, and
dewarping (S136) the identified portion to a rectangular image.

11. A non-transitory computer readable storage medium having stored thereon instructions for implementing the method (100) according to any one of claims 1 to 10, when executed in a device having processing capabilities.

12. A device (200) for adapting a stream of image frames for display, the device comprising circuitry (220) configured to execute functions (232) for performing the method (100) according to any one of claims 1 to 10.
